# DEMANDE DE BREVET EUROPEEN

(11) **EP 1 090 787 A1**
(43) Date de publication de la demande: **11.04.2001**
(21) Numéro de dépôt: 00460054.0
(22) Date de dépôt: 29.09.2000
(51) Int. Cl.: B60J 1/20

(54) **Store à enrouleur à moyens d'équilibrage élastiques du déplacement des leviers**

(30) Priorité: 07.10.1999 FR 9912732
(71) Demandeur: WAGON AUTOMOTIVE SNC, 79302 Bressuire Cédex (FR)
(72) Inventeur: Jolivet, David M., 79300 Bressuire (FR)
(74) Mandataire: Vidon, Patrice

(57) **Abrégé**

L'invention concerne un tore à enrouleur, notamment pour véhicule automobile, comprenant un bâti (11) sur lequel est monté, mobile en rotation, un rouleau d'enroulement (12) auquel est solidarisée une première extrémité d'un écran souple (13), dont la seconde extrémité porte une barre de tirage (17), deux leviers symétriques (14₁, 14₂), montés pivotant sur ledit bâti (11) et reliés à ladite barre de tirage (17), assurant le guidage de ladite barre de tirage (17) lors du déploiement et du reploiement dudit écran (13) autour dudit rouleau d'enroulement (12), ledit store comprenant des moyens élastiques (110) liant lesdits deux leviers (14₁, 14₂), de façon que ces derniers conservent en permanence des déplacements angulaires identiques lors du déploiement et du reploiement dudit écran (13), et que, en conséquence, ladite barre de tirage (17) reste en permanence parallèle audit rouleau d'enroulement (12).

## Description

Le domaine de l'invention est celui des stores à enrouleur, notamment pour véhicules automobiles. Plus précisément, l'invention concerne les stores à enrouleur munis de leviers guidant et/ou entraînant la barre de tirage, pour déployer ou reployer le store.

Classiquement, un store à enrouleur présente une toile, ou rideau, formant écran en position déployée. Une des extrémités de cette toile est montée sur un rouleau d'enroulement mobile en rotation. L'autre extrémité de la toile est munie d'une barre de tirage. En position reployée, la toile est essentiellement enroulée autour du rouleau, et la barre de tirage se trouve donc au voisinage du rouleau d'enroulement. Pour déployer la toile, on agit sur la barre de tirage, de façon à l'éloigner du rouleau d'enroulement, entraînant le déploiement de l'écran.

Dans certains cas, le store est actionné manuellement, le reploiement du store étant alors obtenu sous l'action d'une force de rappel entraînant le rouleau d'enroulement. Dans d'autres situations, on a prévu que le déploiement et le reploiement puissent être motorisés. Dans les deux cas, on prévoit souvent la présence de deux leviers de guidage de la barre de tirage, de façon que l'écran prenne la position déployée souhaitée. De telles barres de guidage sont en particulier nécessaires dans le cas des stores motorisés, si aucun autre élément de guidage et/ou de maintien n'est prévu.

Il apparaît cependant que ces leviers ne sont pas toujours suffisants pour obtenir le bon positionnement de l'écran en position déployée. En effet, souvent, l'un des deux leviers se déplace plus rapidement que l'autre. En conséquence, il atteint sa position déployée alors que le second levier est encore en cours de déploiement. L'écran est alors mal déployé, de travers, et la toile présente des plis.

Le même problème se pose, de façon encore plus importante, lors du reploiement. En effet, il arrive que l'un des leviers se trouve déjà en position repliée, alors que l'autre ne l'est pas encore. Dans ce cas, l'enroulement de la toile n'est pas parfait, la barre de tirage n'est pas non plus bien positionnée, et l'ensemble risque de bouger, et surtout de se bloquer, voire de détériorer le système lors du déploiement suivant.

L'invention a notamment pour objectif de pallier ces différents inconvénients de l'état de la technique.

Plus précisément, un objectif de l'invention est de fournir un store à enrouleur dont l'enroulement et le déroulement sont de bonne qualité, la barre de tirage restant en permanence parallèle au rouleau d'enroulement. En d'autres termes, un objectif de l'invention est de fournir un tel store, muni de leviers et/ou de guidage de la barre de tirage, dont les déplacements sont en permanence symétriques, ou à tout le moins pratiquement symétriques, lors du déploiement et du reploiement de l'écran.

Un objectif particulier de l'invention est de fournir un tel store, permettant de conserver la barre de tirage et le rouleau d'enroulement parallèle sans qu'il soit nécessaire de motoriser les leviers.

Un autre objectif est de fournir un tel store, qui permette d'obtenir un repliement de bonne qualité et complet de la toile autour du rouleau d'enroulement. Notamment, lorsque les leviers présentent une forme de compas (c'est-à-dire qu'ils sont formés de deux éléments articulés l'un à l'autre), l'invention a pour objectif de fournir une technique permettant d'obtenir, lors du reploiement du store, un angle très faible, voir nul, entre les deux éléments de chacun des leviers.

L'invention a également pour objectif de fournir un tel store, qui peut être motorisé.

Encore un autre objectif de l'invention est, bien sûr, de fournir un tel store, qui soit simple à réaliser et à monter, et qui permette d'obtenir un coût de revient acceptable.

Ces objectifs, ainsi que d'autres qui apparaîtront plus clairement par la suite, sont atteints à l'aide d'un store à enrouleur, notamment pour véhicule automobile, comprenant un bâti sur lequel est monté, mobile en rotation, un rouleau d'enroulement auquel est solidarisée une première extrémité d'un écran souple, dont la seconde extrémité porte une barre de tirage, deux leviers symétriques, montés pivotant sur ledit bâti et reliés à ladite barre de tirage, assurant le guidage de ladite barre de tirage lors du déploiement et du reploiement dudit écran autour dudit rouleau d'enroulement. Selon l'invention, le store comprend des moyens élastiques liant lesdits deux leviers, de façon que ces derniers conservent en permanence des déplacements angulaires identiques lors du déploiement et du reploiement dudit écran, et que, en conséquence, ladite barre de tirage reste en permanence parallèle audit rouleau d'enroulement.

Selon un mode de réalisation avantageux, lesdits leviers comprennent une partie d'entraînement de ladite barre de tirage, s'étendant entre l'axe de pivot et ladite barre de tirage, et une partie d'actionnement s'étendant au-delà dudit axe de pivot, et lesdits moyens élastiques comprennent un élément de compensation des efforts différentiels entre lesdits leviers, monté à rotation sur ledit bâti, et contrôlant le mouvement de deux tiges rigides, dont les premières extrémités respectivement sont montées symétriquement par rapport à l'axe de rotation dudit élément de compensation, et dont les secondes extrémités sont reliées respectivement à la partie d'actionnement de chacun desdits leviers.

Préférentiellement, dans ce cas, ledit élément de compensation met en oeuvre des moyens de rappel, transmettant leur énergie auxdits leviers lors du déploiement dudit écran, et rebandés par lesdits leviers lors du reploiement dudit écran.

Selon un premier mode de mise en oeuvre, lesdits moyens de rappel comprennent un ressort spiral. Selon un second mode de mise en oeuvre, lesdits moyens de rappel peuvent comprendre deux ressorts à boudin, dont une première extrémité est reliée audit bâti, et dont la seconde extrémité est reliée au point de liaison entre ledit élément de compensation et l'une desdites tiges.

Avantageusement, lesdits ressorts s'étendent alors sensiblement parallèlement audit rouleau d'enroulement.

Selon un aspect avantageux, ledit rouleau d'enroulement est motorisé. Toutefois, il est clair que l'invention peut également s'appliquer aux stores manuels.

Le moteur actionnant ledit rouleau d'enroulement agit préférentiellement de façon à :
- réguler la vitesse de déploiement, ce dernier étant assuré par lesdits leviers ;
- enrouler la toile, lors du reploiement, et entraîner lesdits leviers, qui assurent le bandage desdits moyens élastiques.

De façon préférentielle, chacun desdits leviers présentent, entre l'axe de pivot et ladite barre de tirage, deux biellettes articulées formant compas. Dans ce cas, la biellette reliant ladite barre de tirage à l'axe dudit compas est avantageusement suffisamment élastique pour assurer une fonction de sécurité anti-pincement.

Préférentiellement, en position reployée, les biellettes de chacun desdits leviers forment un angle compris entre 0° et 15°.

D'autres caractéristiques et avantages de l'invention apparaîtront plus clairement à la lecture de la description suivante de deux modes de réalisation préférentiels donnés à titre de simples exemples illustratifs et non limitatifs, et des dessins annexés, parmi lesquels :
- les figures 1A et 1B illustrent, de façon schématique, un store à enrouleur selon l'invention, respectivement en position déployée et en position reployée ;
- la figure 2 présente un premier mode de réalisation des moyens élastiques selon l'invention, mettant en oeuvre un ressort spiral ;
- la figure 3 présente un second mode de réalisation des moyens élastiques de l'invention, basé sur deux ressorts à boudin.

Comme indiqué précédemment, l'invention propose un système mécanique nouveau pour écran à déploiement motorisé ou manuel, mettant en oeuvre deux leviers entraînant la barre de tirage.

Selon l'invention, les deux leviers sont liés par des éléments rigides, couplés à un système élastique. La partie rigide transmet l'énergie emmagasinée par le système élastique aux leviers.

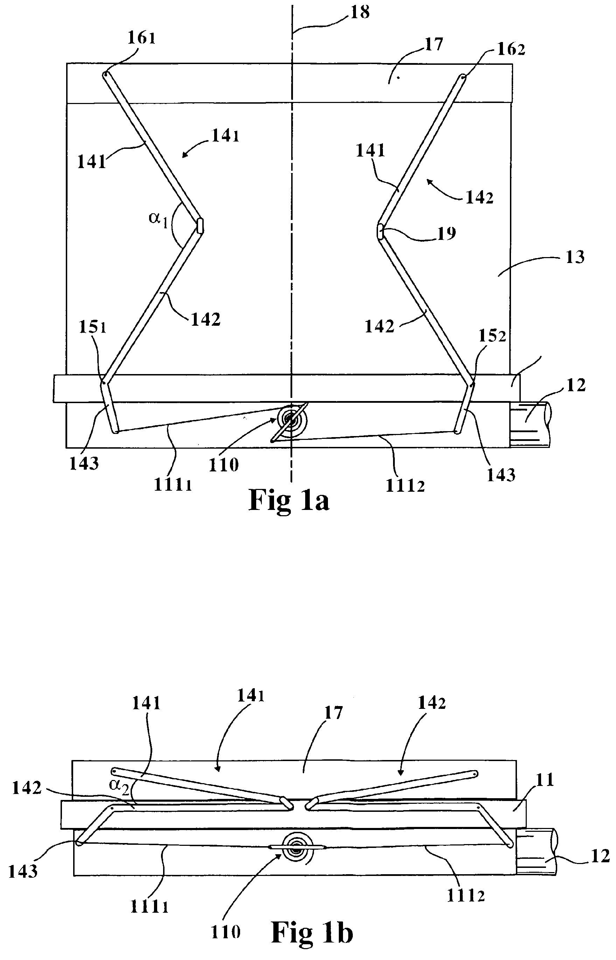

Les figures 1A et 1B présentent un exemple de store à enrouleur selon l'invention, respectivement en position déployée, ou quasi-déployée, et en position reployée.

Ce store est, par exemple, destiné à équiper une lunette arrière de véhicule automobile.

Il présente, classiquement, un bâti 11 qui peut former boîtier et/ou être prévu pour être monté sous la lunette arrière ou en tout emplacement adéquat. Un rouleau d'enroulement 12 est monté à rotation sur ce bâti 11. La toile 13 formant l'écran du store peut être enroulé sur ce rouleau 12 (position reployée : figure 1B) ou déroulée (position déployée: figure 1A).

Deux leviers 14₁ et 14₂ sont montés pivotants autour d'un axe 15₁, 15₂ sur le bâti 11. Une extrémité 16₁, 16₂ de ces leviers 14₁, 14₂ est solidaire de la barre de tirage 17, qui entraîne l'extrémité libre de la toile 13.

Le store selon l'invention peut être manuel, l'utilisateur actionnant le déploiement ou le reploiement de la toile 13 en agissant directement sur la barre de tirage 17. On peut également prévoir que le rouleau 12 est entraîné par des moyens de motorisation, par exemple électriques.

Les deux leviers 14₁ et 14₂ sont symétriques, par rapport à l'axe 18. Ils sont prévus pour assurer le guidage et/ou le maintien de la barre de tirage 17, dans toutes les positions, et notamment en cours de reploiement et de déploiement. Lors de ces opérations, les deux leviers 14₁, 14₂ pivotent autour de leurs axes respectifs 15₁ et 15₂.

Sur le mode de réalisation illustré en figure 1A et 1B, ces leviers 14₁ et 14₂ sont réalisés sous la forme de deux éléments 141 et 142 articulés en un point central 19, formant compas. Lors du déploiement (figure 1A), l'angle α₁ entre les deux éléments 141 et 142 s'ouvre, et peut atteindre jusqu'à 180°. En position reployé (figure 1B), l'angle α₂ entre les deux éléments 141, 142 est très faible, voire nul, et la barre de tirage 17 vient en contact avec le bâti 11.

Cette structure en compas est avantageuse. Il est cependant possible d'envisager d'autres structures, telles qu'un levier simple (l'élément 142 se prolongera alors jusqu'à la barre de tirage 17, son extrémité pouvant par exemple coulisser dans une lumière prévue à cet effet dans la barre 17), un système à base de croisillons...

On comprend que la barre de tirage 17 doit en permanence rester parallèle au bâti 11, ou plus précisément au rouleau 12. En pratique, on constate dans les différents systèmes connus, qu'ils soient ou non motorisés, qu'il n'est pas rare que l'un des leviers 14₁ou 14₂ se déplace plus rapidement que l'autre, que ce soit du fait de la présence de frottements, d'un tirage de la barre de tirage 17 ou d'un entraînement du rouleau 12 non homogène,...

Dans ce cas, la barre de tirage 17 n'est plus parallèle au rouleau 12. En position déployée, cela entraîne, au minimum, la présence de plis dans le store, mais éventuellement également une détérioration du système. Le problème est encore plus important en position reployée, l'un des côtés de la toile 13 n'étant pas convenablement enroulé. L'opération de déploiement suivante sera alors difficile et pourra conduire, notamment dans le cas de systèmes motorisés, à une détérioration du store.

L'invention apporte une solution à ce problème, à l'aide de moyens élastiques 110, agissant sur les deux leviers 14₁,14₂ de façon à homogénéiser leurs déplacements en compensant les efforts différentiels entre les deux leviers.

Au-delà de l'axe de pivot 15, l'élément 142 se prolonge par une portion 143 d'entraînement. Deux tiges rigides 111₁ et 111₂ relient les deux portions d'entraînement 143 par l'intermédiaire des moyens élastiques 110.

Plus précisément, la première extrémité 111₁ et 111₂ de chacune des tiges est montée et articulée sur la portion d'entraînement 143 de chaque levier. L'autre extrémité est reliée à un élément monté en rotation, dont le mouvement est contrôlé par les moyens élastiques 110.

La partie rigide par les tiges 111₁ et 111₂ transmet l'énergie emmagasinée par les moyens élastiques 110 aux leviers 14₁, 14₂. Ainsi, tant à l'ouverture qu'à la fermeture du store, on obtient un déplacement identique des deux biellettes inférieures 142. La technique de l'invention permet de compenser les efforts différentiels entre ces deux biellettes.

En effet, si l'une d'entre elles vient à se déplacer plus rapidement que l'autre, son mouvement est transmis à l'autre biellette par l'intermédiaire 111₁ et 111₂ et des moyens élastiques 110. Cette dernière biellette vient alors se déplacer à la même vitesse que la première, ou ralentit celle-ci.

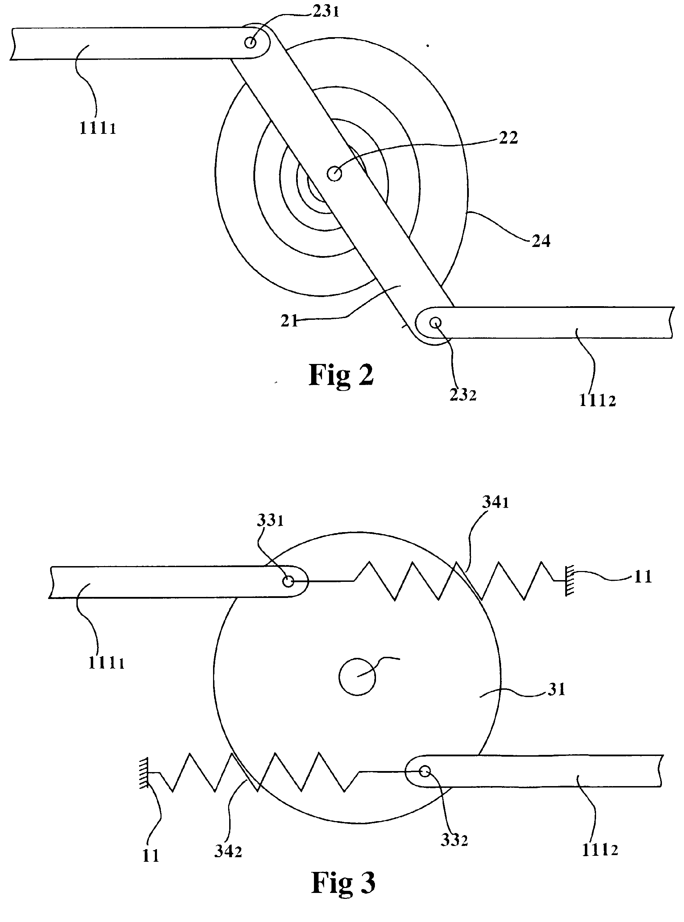

La figure 2 présente un premier mode de réalisation des moyens élastiques de l'invention tels qu'illustrés en figures 1A et 1B.

Ils comprennent un élément de liaison 21, monté mobile en rotation sur un axe 22 (se situant sur l'axe de symétrie 18 du store). De part et d'autre de cet élément de liaison 21, symétriquement par rapport à l'axe de rotation 22, sont montées, de façon articulée, les extrémités 23₁ et 23₂ des tiges 111₁ et 111₂. Lorsque les leviers 14₁, 14₂, se déplacent, l'élément 21 tourne autour de son axe 22 en conséquence.

Un ressort en spirale 24 est monté sur le même axe de rotation 22, et contrôle le déplacement de l'élément de liaison 21 de façon à compenser et équilibrer les efforts agissant sur chacun des leviers, par l'intermédiaire des tiges 111₁ et 111₂.

La figure 3 présente une seconde variante de ces moyens élastiques. Une pièce de liaison 31 est également montée à rotation sur un axe 32. Cette pièce est ici représentée sous une forme circulaire. Il apparaît cependant très clairement qu'elle peut avoir une forme allongée, telle que celle représentée en figure 2, ou tout autre forme quelconque. Il en est d'ailleurs de même, bien entendu, pour la pièce 22 de la figure 2.

De la même façon que sur la figure 2, les biellettes 111₁ et 111₂ sont montées pivotantes sur des axes 33₁ et 33₂, répartis symétriquement de part et d'autre de la ligne de rotation 32.

La différence avec le mode de réalisation de la figure 2 repose sur les moyens de rappel, qui sont ici constitués par deux ressorts à boudin 34₁ et 34₂, s'étendant sensiblement parallèlement l'un par rapport à l'autre et sensiblement parallèlement au rouleau d'enroulement 12. Une première extrémité de chacun de ces ressorts 34₁ et 34₂ est reliée respectivement à chacune des tiges 111₁ et 111₂. L'autre extrémité est reliée au châssis 11.

Sur le plan de la transmission et de la compensation des efforts, le résultat obtenu est le même qu'avec le système illustré en figure 2.

D'autres modes de réalisation basés sur ce même principe sont bien sûr envisageables sans sortir du cadre de la présente invention.

## Revendications

1. Store à enrouleur, notamment pour véhicule automobile, comprenant un bâti (11) sur lequel est monté, mobile en rotation, un rouleau d'enroulement (12) auquel est solidarisée une première extrémité d'un écran souple (13), dont la seconde extrémité porte une barre de tirage (17),
deux leviers symétriques (14_{1,} 14₂), montés pivotant sur ledit bâti (11) et reliés à ladite barre de tirage (17), assurant le guidage de ladite barre de tirage (17) lors du déploiement et du reploiement dudit écran (13) autour dudit rouleau d'enroulement (12),
caractérisé en ce qu'il comprend des moyens élastiques (110) liant lesdits deux leviers (14₁, 14₂), de façon que ces derniers conservent en permanence des déplacements angulaires identiques lors du déploiement et du reploiement dudit écran (13), et que, en conséquence, ladite barre de tirage (17) reste en permanence parallèle audit rouleau d'enroulement (12).

2. Store à enrouleur selon la revendication 1, caractérisé en ce que lesdits leviers (14₁, 14₂) comprennent une partie (141, 142) d'entraînement de ladite barre de tirage, s'étendant entre l'axe de pivot et ladite barre de tirage, et une partie d'actionnement (143) s'étendant au-delà dudit axe de pivot,
et en ce que lesdits moyens élastiques (110) comprennent un élément (21 ; 31) de compensation des efforts différentiels entre lesdits leviers, monté à rotation (22 ; 32) sur ledit bâti, et contrôlant le mouvement de deux tiges rigides (111₁,111₂) dont les premières extrémités respectivement sont montées symétriquement par rapport à l'axe de rotation dudit élément de compensation (21 ; 31), et dont les secondes extrémités sont reliées respectivement à la partie d'actionnement (143) de chacun desdits leviers.

3. Store à enrouleur selon la revendication 2, caractérisé en ce que ledit élément de compensation met en oeuvre des moyens de rappel (24 ; 34₁, 34₂), transmettant leur énergie auxdits leviers lors du déploiement dudit écran, et rebandés par lesdits leviers lors du reploiement dudit écran (24).

4. Store à enrouleur selon la revendication 3, caractérisé en ce que lesdits moyens de rappel comprennent un ressort spiral.

5. Store à enrouleur selon la revendication 3, caractérisé en ce que lesdits moyens de rappel comprennent deux ressorts à boudin (34₁, 34₂), dont une première extrémité est reliée audit bâti, et dont la seconde extrémité est reliée au point de liaison entre ledit élément de compensation et l'une desdites tiges.

6. Store à enrouleur selon la revendication 5, caractérisé en ce que lesdits ressorts (34₁, 34₂) s'étendent sensiblement parallèlement audit rouleau d'enroulement (12).

7. Store à enrouleur selon l'une quelconques des revendications 1 à 6, caractérisé en ce que ledit rouleau d'enroulement (12) est motorisé.

8. Store à enrouleur selon la revendication 7, caractérisé en ce que le moteur actionnant ledit rouleau d'enroulement agit de façon à :
- réguler la vitesse de déploiement, ce dernier étant assuré par lesdits leviers ;
- enrouler la toile, lors du reploiement, et entraîner lesdits leviers, qui assurent le bandage desdits moyens élastiques.

9. Store à enrouleur selon l'une quelconque des revendications 1 à 8, caractérisé en ce que chacun desdits leviers présentent, entre l'axe de pivot et ladite barre de tirage, deux biellettes (141,142) articulées formant compas.

10. Store à enrouleur selon la revendication 9, caractérisé en ce que la biellette (141) reliant ladite barre de tirage à l'axe dudit compas est suffisamment élastique pour assurer une fonction de sécurité anti-pincement.

11. Store à enrouleur selon l'une quelconque des revendications 9 et 10, caractérisé en ce que, en position reployée, les biellettes (141, 142) de chacun desdits leviers forment un angle compris entre 0° et 15°.
